# EUROPEAN PATENT SPECIFICATION

(11) **EP 3 042 628 B1**
(45) Date of publication and mention of the grant of the patent: **06.11.2019**
(21) Application number: 15150131.9
(22) Date of filing: 06.01.2015
(51) Int. Cl.: A61C 8/00

(54) **BIOGLASS FIBER DENTAL IMPLANT**
BIOGLASFASER-DENTALIMPLANTAT
IMPLANT DENTAIRE À FIBRE DE BIOVERRE

(43) Date of publication of application: 13.07.2016
(73) Proprietor: ILUMI Sciences Inc., Chantilly, VA 20151 (US); Lu, Luke, San Diego, CA 92131 (US)
(72) Inventor: Lu, Luke, Cambridge, Cambridgeshire CB1 1AH (GB); Tokizawa, Toshihiro, Cambridge, Cambridgeshire CB1 1AH (GB); Lu, Kuan-Yu, Cambridge, Cambridgeshire CB1 1AH (GB); Lu, I-Ching, Cambridge, Cambridgeshire CB1 1AH (GB)
(74) Representative: Lang, Christian

(56) References cited:
- EP-A1- 2 522 299
- DE-A1-102013 211 175
- JP-A- 2009 118 914
- US-A1- 2005 214 717
- US-A1- 2006 208 393
- US-A1- 2012 107 773

## Description

### BACKGROUND OF THE INVENTION

### (a) Technical Field of the Invention

This invention is related to a dental implant which provides lifetime sustainability of real-world use.

### (b) Description of the Prior Art

A dental implant (also known as an endosseous implant or fixture) is a surgical component that interfaces with the bone of the jaw or skull to support a dental prosthesis such as a crown, bridge, denture, facial prosthesis or to act as an orthodontic anchor. The basis for modem dental implants is a biologic process called osseointegration where materials, such as titanium, form an intimate bond to bone. The implant fixture is first placed, so that it is likely to osseointegrate, then a dental prosthetic is added. A variable amount of healing time is required for osseointegration before either the dental prosthetic (a tooth, bridge or denture) is attached to the implant or an abutment is placed which will hold a dental prosthetic.

The primary use of dental implants is to support dental prosthetics. Modern dental implants make use of osseointegration, the biologic process where bone fuses tightly to the surface of specific materials such as titanium and some ceramics. The integration of implant and bone can support physical loads for decades without failure.

For individual tooth replacement, an implant abutment is first secured to the implant with an abutment screw. A crown (the dental prosthesis) is then connected to the abutment with dental cement, a small screw, or fused with the abutment as one piece during fabrication. Dental implants, in the same way, can also be used to retain a multiple tooth dental prosthesis either in the form of a fixed bridge or removable dentures.

US Patent Application No. 2006/0208393 A1 discloses fiber-reinforced composites for dental materials, and a dental implant according to the preamble of claim 1. The fiber-reinforced composite includes an inner core of fiber-reinforced composite surrounded by a sheath of fiber-reinforced composite material.

The long-term success of implants is determined, in part, by the forces they have to support. As implants have no periodontal ligament, there is no sensation of pressure when biting so the forces created are higher. To offset this, the location of implants must distribute forces evenly across the prosthetics they support. Concentrated forces can result in fracture of the bridgework, implant components, or loss of bone adjacent to the implant. The ultimate location of implants is based on both biologic (bone type, vital structures, health) and mechanical factors.

The design of implants has to, therefore, provide high tensile strength and dentin elasticity similar to natural tooth in order to account for a lifetime of real-world use in a person's mouth. Traditionally, titanium or zirconia (ceramic) is widely used for dental implants due to its high tensile strength. However, the titanium or zirconia (ceramic) material lacks dentin elasticity and is easily broken when hit.

Thus, there is a need for innovative design of dental implant to provide lifetime sustainability of real-world use.

### SUMMARY OF THE INVENTION

In accordance with the present invention, a bioglass fiber dental implant with fiber material and structure as defined in claim 1 is proposed to solve the above-mentioned problem.

A concept of the present invention is to provide a rugged dentin elastic structure for a bioglass fiber dental implant. The present invention exploits mechanics of fibers and employs a woven method to provide the said structure. The proposed fibers may be tensile-strength-enhanced and have one or more layers. The provided structure may also improve the osseointegration process along the way.

According to a first aspect of the present invention, an exemplary bioglass fiber dental implant with fiber material and structure is disclosed. The bioglass fiber dental implant includes a fixture and a peripheral junction. The fixture is arranged for osseointegrating a bone of the jaw or skull. The peripheral junction is connected to the fixture and is arranged for connecting an abutment supporting a dental prosthesis. The fixture and the peripheral junction are made of fiber-enhanced resin. The fibers in the fiber-enhanced resin form a woven fiber structure, which includes a bioinert material, wherein the Single fiber in the fiber-enhanced resin is a multilayer Single fiber and at least one layer of the multilayer Single fiber is made of bioinert material, and at least one layer of the multilayer Single fiber is made of bioactive material, wherein the at least one layer of the multilayer Single fiber made of bioactive material is made of bioglass, so that the bioglass fiber dental implant can has high tensile strength and dentin elasticity at the same time. That is to say, the woven fiber structure is better than traditional one-piece structure regarding concentrated forces on the dental implant, and thus fractures can be prevented by using the woven fiber structure.

The woven fiber structure includes a center fiber shaft and a plurality of braided fiber shafts. The center fiber shaft is provided straightly through the woven fiber structure, while the braided fiber shafts are interlaced-knitted around the center fiber shaft, such that the center fiber shaft and the plurality of braided fiber shafts are respectively oriented at angular positions to show a pattern that two braided fiber shafts are arranged in an X-shape that crisscrosses the center fiber shaft. The center fiber shaft acts as a supporting component that provides an extra fixation for the braided fiber shafts, hence tensile strength in the direction of the center fiber shaft is higher by means of this center-enhanced mechanism, as comparing to traditional cross knitting mechanism. In addition to the round-shaped fiber, each fiber may be hexagonal so as to provide even higher strength. In a specific embodiment, each fiber only has one layer made of bioactive materials, such as bioglass fiber, collagen, hydroxylapatite (HA), or tricalcium phosphate (TCP). Alternatively, the fiber also can be made of bioinert glass fiber with X ray opacity or bioinert materials. When the bioglass fiber dental implant is installed, the osseointegration process may be started between the bioglass fiber dental implant and the bone, in other words, the osseointegration process may be started between the fiber of the bioglass fiber dental implant and the bone. Since the fiber of the bioglass fiber dental implant contains bioactive material, much more intimate osseointegration can be provided by this woven method, as comparing to traditional coating method.

In a preferred embodiment, the fiber in the fiber-enhanced resin may be a multilayer fiber, and a plurality of coefficients of thermal expansion of layers of the multilayer fiber is gradually lower in order from an inner layer to an outer layer. For example, each fiber may include a core layer and a shell layer. The shell layer encloses a circumferential surface of the core layer and has a coefficient of thermal expansion lower than that of the core layer. Due to such natural property of fiber mechanics, such configuration is advantageous for a fiber shaft to be able to undertake a higher tensile force, and thus higher tensile strength of the bioglass fiber dental implant can be provided. High tensile strength is crucial to a bioglass fiber dental implant because the bioglass fiber dental implant is frequently used and the external forces applied thereon are directionally inconsistent. Each layer of the multilayer fiber can be formed with a round, a hexagonal, or a strip filament. In this embodiment, the core layer may be also formed with a round, or a hexagonal filament, while the shell layer is formed with a round, hexagonal, or a strip filament in order to enhance the strength of the woven fiber structure. At least one layer of the multilayer fiber is made of bioinert material, and at least one layer of the multilayer fiber is made of bioactive material. In a specific embodiment, the shell layer is made of bioactive materials, such as bioglass, collagen, hydroxylapatite (HA), or tricalcium phosphate (TCP). While the shell layer is in contact with the bone, the bioactive material may be released from the shell layer and thus is in contact with the osteoblast for osseointegration. The core layer in this embodiment may be made of bioinert material so as to maintain the structure of bioglass fiber dental implant.

In a preferred embodiment, each fiber may include a core layer, a middle layer, and a shell layer. The middle layer encloses a circumferential surface of the core layer, while the shell layer encloses a circumferential surface of the middle layer. A coefficient of thermal expansion of the shell layer is lower than a coefficient of thermal expansion of the middle layer, and the coefficient of thermal expansion of the middle layer is lower than that of the core layer. The merit of this three-layer structure is that when the shell layer osseointegrates with bones, two-layer structure constituted by the remained core layer and middle layer can be still remained, so as to provide higher tensile strength, as comparing to single layer structure. At least one layer of the multilayer fiber is made of bioinert material, and at least one layer of the multilayer fiber is made of bioactive material. For example, in a specific embodiment, the core layer and/or the middle layer may be made of bioinert glass fiber with X ray opacity, bioinert material, while the shell layer is made of bioactive materials, such as bioglass, collagen, hydroxylapatite (HA), or tricalcium phosphate (TCP). In a specific embodiment, the core layer and/or the middle layer may be made of bioactive materials, such as bioglass, collagen, hydroxylapatite (HA), or tricalcium phosphate (TCP), and the shell layer may be made of bioinert glass fiber with X ray opacity, bioinert material. In a specific embodiment, the core layer and/or the middle layer may be formed with a round, or a hexagonal filament, while the shell layer may be formed with a round, a hexagonal, or a strip filament in order to enhance the strength of the woven fiber structure.

These and other objectives of the present invention will undoubtedly become obvious to those of ordinary skill in the art after reading the following detailed description of the preferred embodiment that is illustrated in the various figures and drawings.

### BRIEF DESCRIPTION OF THE DRAWINGS

FIG. 1 is illustrating schematic diagram of a bioglass fiber dental implant according to a general embodiment of the present invention.
FIG. 2A and 2B are illustrating schematic diagrams of a fiber used in the bioglass fiber dental implant according to first and second embodiments of the present invention.
FIG. 3A and 3B are illustrating schematic diagrams of a fiber used in the bioglass fiber dental implant according to third and fourth embodiments of the present invention.
FIG. 4A and 4B are illustrating schematic diagrams of a fiber used in the bioglass fiber dental implant according to fifth and sixth embodiments of the present invention.
FIG. 5A and 5B are illustrating schematic diagrams of a fiber used in the bioglass fiber dental implant according to seventh and eighth embodiments of the present invention.
FIG. 6A and 6B are illustrating schematic diagrams of a fiber used in the bioglass fiber dental implant according to ninth and tenth embodiments of the present invention.
FIG. 7A and 7B are illustrating schematic diagrams of a fiber used in the bioglass fiber dental implant according to eleventh and twelfth embodiments of the present invention.
FIG. 8 is illustrating schematic diagram of a fiber used in the bioglass fiber dental implant according to thirteenth embodiments of the present invention.
FIG. 9 is illustrating schematic diagram of a bioglass fiber dental implant according to another general embodiment of the present invention.

### DETAILED DESCRIPTION OF THE PREFERRED EMBODIMENTS

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to ...".

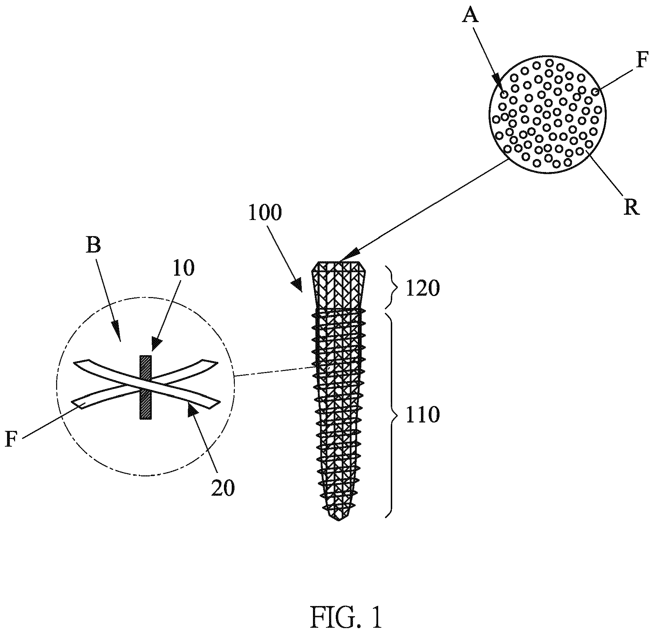

Please refer to FIG. 1, which illustrating schematic diagram of a bioglass fiber dental implant 100 according to a general embodiment of the present invention. The bioglass fiber dental implant 100 includes a fixture 110 and a peripheral junction 120. The fixture 110 is arranged for osseointegrating a bone of the jaw or skull after the bioglass fiber dental implant 100 is installed. The peripheral junction 120 is connected to the fixture 110 and is arranged for connecting an abutment (not shown) supporting a dental prosthesis (not shown), such as a crown. The fixture 110 and the peripheral junction 120 are both made of fiber-enhanced resin. The fiber-enhanced resin is a resin in which a fiber is provided. Please refer to the sub-figure A of FIG. 1, which illustrating a top view of the bioglass fiber dental implant 100. In the sub-figure A, it can be seen that fibers F are fixed within resin R and thus are provided within the bioglass fiber dental implant 100. Continue to refer to the sub-figure B of FIG. 1, it can be seen that fibers F are woven to form a woven fiber structure. The woven fiber structure is advantageous for the bioglass fiber dental implant 100 to be able to have high tensile strength and dentin elasticity at the same time.

Sub-figure B shows that the woven fiber structure includes a center fiber shaft 10 and a plurality of braided fiber shafts 20. The center fiber shaft 10 is provided straightly through the woven fiber structure, while the braided fiber shafts 20 are interlaced-knitted around the center fiber shaft. This "*" pattern of sub-figure B provides additional fixation for the braided fiber shafts 20 and higher tensile strength in vertical direction and thus more rugged structure is yielded, as comparing to traditional structure with "x" pattern.

The resin R may be made of bioinert or biodegradable materials in order to facilitate osseointegration process, and the resin R may be thermosetting or thermoplastic, depending on the implementations. The fibers F may be a single-layer fiber or a multilayer fiber and may be made of bioinert or bioactive materials. Detailed description will be stated in the followings.

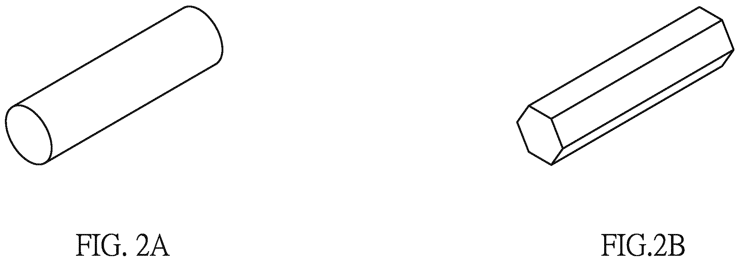

Please refer to FIG. 2A and 2B, which respectively illustrating schematic diagrams of a fiber used in the bioglass fiber dental implant 100 according to first and second embodiments of the present invention. It can be seen from FIG. 2A and 2B, the fiber used in the bioglass fiber dental implant 100 is single-layer fiber, however, the fiber can be shaped in round or hexagonal. The purpose of forming the hexagonal-shaped fiber is to provide higher tensile strength for the woven fiber structure of the bioglass fiber dental implant 100. In these embodiments, the fiber can be made of bioactive materials, such as bioactive glass fiber, collagen, hydroxylapatite (HA), or tricalcium phosphate (TCP) fiber, so that when the bioglass fiber dental implant 100 is installed, the fibers may start osseointegrating into the bone. Since the fibers used in this embodiment is bioactive, the resin should be made of bioinert materials in order to maintain the structure of the bioglass fiber dental implant 100. However, the present invention is not limited to this, the fiber also can be made of bioinert glass fiber with X ray opacity or bioinert materials.

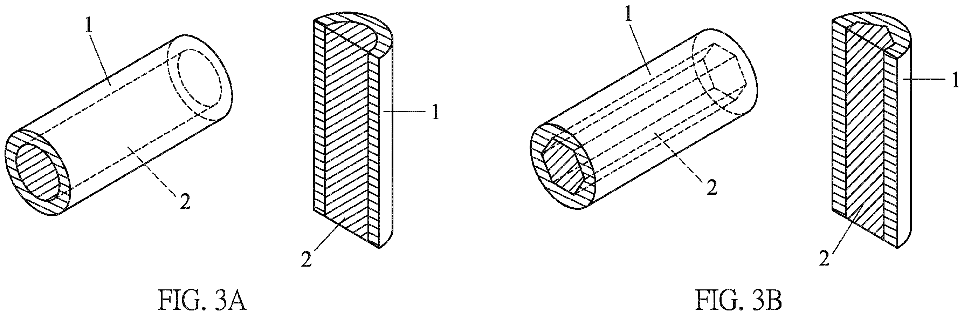

Please refer to FIG. 3A and 3B, which respectively illustrating schematic diagrams of a fiber used in the bioglass fiber dental implant 100 according to third and fourth embodiments of the present invention. In these embodiments, the fiber in the fiber-enhanced resin of the bioglass fiber dental implant 100 is a multilayer fiber, and a plurality of coefficients of thermal expansion of layers of the multilayer fiber is gradually lower in order from an inner layer to an outer layer. It can be seen from FIG. 3A and 3B, the fiber used in the bioglass fiber dental implant 100 is two-layer fiber. In these embodiments, the multilayer fiber includes a core layer 2 and a shell layer 1, the shell layer 1 encloses a circumferential surface of the core layer 2 and has a coefficient of thermal expansion lower than that of the core layer 2. This configuration is advantageous for the two-layer fiber to be able to provide higher tensile force, and thus higher tensile strength for the bioglass fiber dental implant 100 can be provided. Each layer of the multilayer fiber is formed with a round, a hexagonal, or a strip filament. In these embodiments, the core layer 2 is formed with a round, or a hexagonal filament, while the shell layer 1 is formed with a round filament. At least one layer of the multilayer fiber is made of bioinert material, and at least one layer of the multilayer fiber is made of bioactive material. The shell layer 1 in this embodiment is made of bioactive materials, such as bioglass, collagen, hydroxylapatite (HA), or tricalcium phosphate (TCP). While the shell layer 1 is in contact with the bone, the bioactive material may be released from the shell layer 1 and thus is in contact with the osteoblast of the bone for osseointegration. The core layer 2 in this embodiment may be made of bioinert material so as to maintain the structure of bioglass fiber dental implant 100.

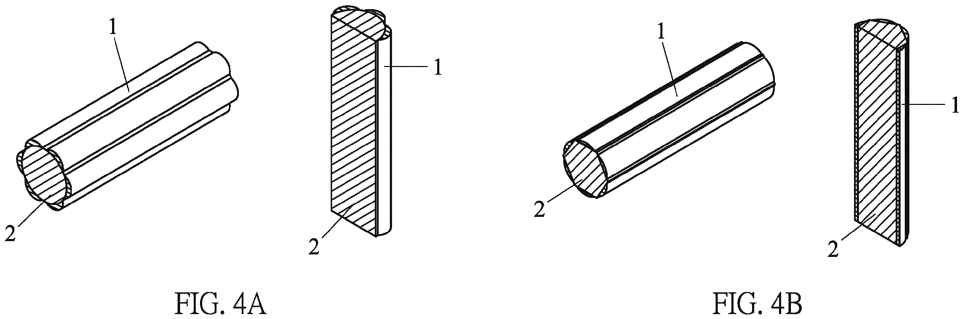

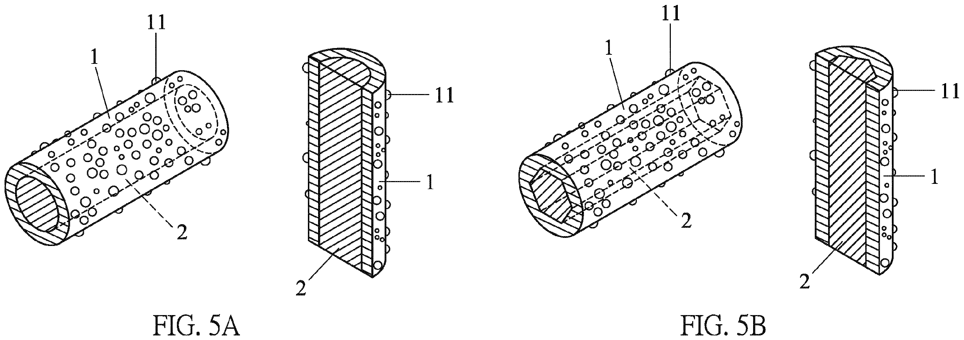

Refer to FIG. 4A and 4B, which respectively illustrating schematic diagrams of a fiber used in the bioglass fiber dental implant 100 according to fifth and sixth embodiments of the present invention. It can be seen from FIG. 4A and 4B, the configurations of the core layer 2 and the shell layer 1 are respectively same as the one in the third and fourth embodiments. In the fifth and sixth embodiments, the shell layer 1 is formed with a strip filament. The function of strip configuration is to provide more fixation force between fibers. Please refer to FIG. 5A and 5B, which respectively illustrating schematic diagrams of a fiber used in the bioglass fiber dental implant 100 according to seventh and eighth embodiments of the present invention. It can be seen from FIG. 5A and 5B, the configurations of the core layer 2 and the shell layer 1 are respectively the same as the one in the third and fourth embodiments. In the seventh and eighth embodiments, an outer surface of the shell layer 1 has an extra punctate coating 11. The function of punctate coating is also to provide more fixation force between fibers.

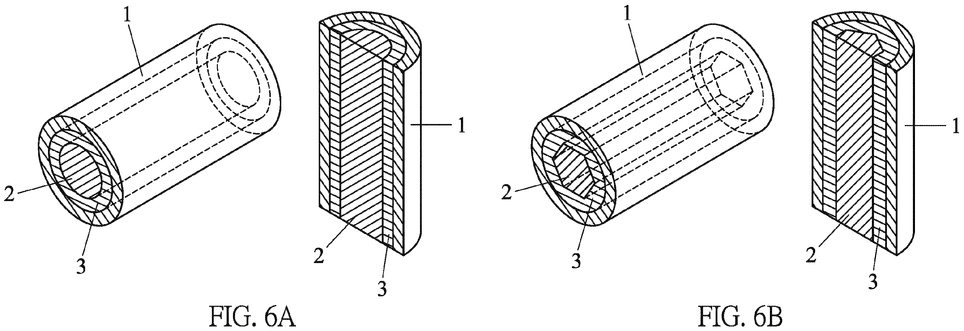

Refer to FIG. 6A and 6B, which respectively illustrating schematic diagrams of a fiber used in the bioglass fiber dental implant 100 according to ninth and tenth embodiments of the present invention. In these embodiments, the fiber in the fiber-enhanced resin of the bioglass fiber dental implant 100 is a multilayer fiber, and a plurality of coefficients of thermal expansion of layers of the multilayer fiber is gradually lower in order from an inner layer to an outer layer. It can be seen from FIG. 6A and 6B, the fiber used in the bioglass fiber dental implant 100 is three-layer fiber. In these embodiments, the multilayer fiber includes a core layer 2, a middle layer 3, and a shell layer 1, the middle layer 3 encloses a circumferential surface of the core layer 2, while the shell layer 1 encloses a circumferential surface of the middle layer 3. A coefficient of thermal expansion of the shell layer 1 is lower than a coefficient of thermal expansion of the middle layer 3, and the coefficient of thermal expansion of the middle layer 3 is lower than that of the core layer 2. At least one layer of the multilayer fiber is made of bioinert material, and at least one layer of the multilayer fiber is made of bioactive material. In these embodiments, the core layer 2 and/or the middle layer 3 may be made of bioinert glass fiber with X ray opacity or bioinert material, while the shell layer 1 is made of bioactive materials, such as bioglass, collagen, hydroxylapatite (HA), or tricalcium phosphate (TCP). The purpose of this three-layer configuration is that when the shell layer 1 osseointegrates with bones, two-layer structure constituted by the remained core layer 2 and middle layer 3 can be still remained. Besides, the three-layer configuration can inherently undertake greater tensile force, as comparing to two-layer configuration. In this embodiment, the core layer 2 may be formed with a round or a hexagonal filament while the middle layer 3 and the shell layer 1 are formed with a round filament. Of course, the present invention is not limited to this, in another embodiment, the core layer 2 and/or the middle layer 3 is made of bioactive materials, such as bioglass, collagen, hydroxylapatite (HA), or tricalcium phosphate (TCP), and the shell layer 1 may be made of bioinert glass fiber with X ray opacity or bioinert material. Therefore, the bioactive material may be released from the core layer 2 or the middle layer 3 and thus is in contact with the osteoblast of the bone for osseointegration.

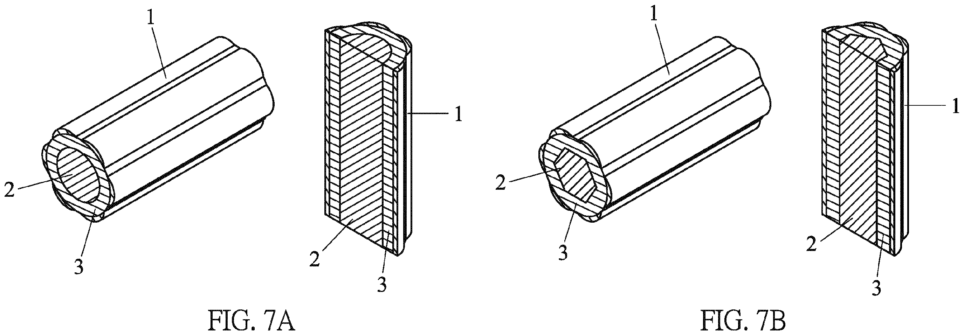

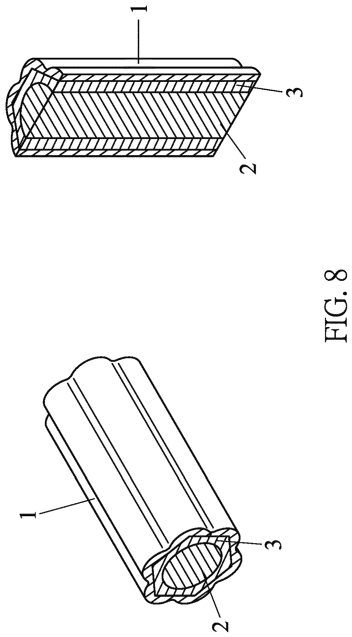

Refer to FIG. 7A, 7B, and 8, which respectively illustrating schematic diagrams of a fiber used in the bioglass fiber dental implant 100 according to eleventh, twelfth and thirteenth embodiments of the present invention. It can be seen from FIG. 7A and 7B, the configurations of the core layer 2, middle layer 3 and the shell layer 1 are respectively same as the one in the ninth and tenth embodiments. In the eleventh and twelfth embodiments, the shell layer 1 is formed with a strip filament. In FIG. 8, the configurations of the core layer 2, middle layer 3 and the shell layer 1 are respectively same as the one in the eleventh and twelfth embodiment. In the thirteenth embodiment, the middle layer 3 is formed with a hexagonal filament. The purpose of strip configuration of shell layer 1 is to provide more fixation force between fibers. In this embodiment, the shell layer 1 and the middle layer 3 are made of bioinert material, and the core layer 2 is made of bioactive glass, collagen, hydroxylapatite (HA), or tricalcium phosphate (TCP).

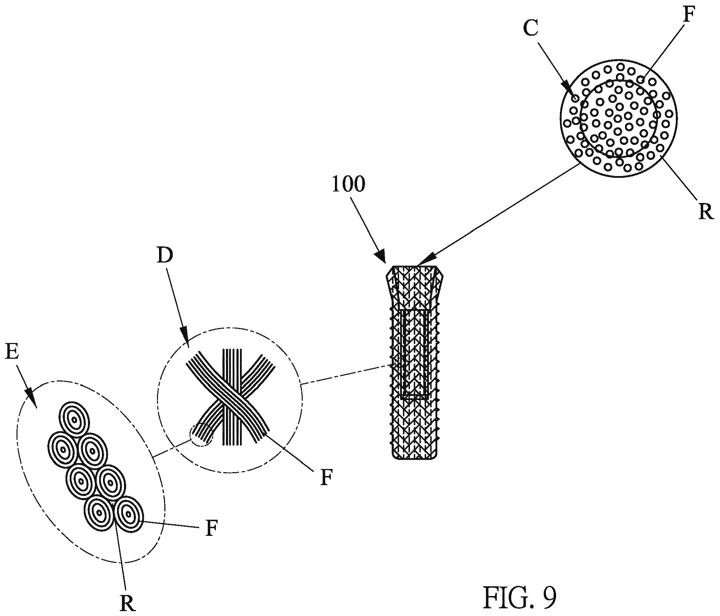

Please refer to FIG. 9, the bioglass fiber dental implant 100 may be made into a double-screw configuration according to implementation requirements. In sub-figure C, it can be seen that the fibers F are fixed within the resin R and thus are provided within the bioglass fiber dental implant 100 with double-screw configuration. Continue to refer to the sub-figure D of FIG. 9, it can be seen that fibers F are woven to form a woven fiber structure. The sub-figure E is illustrating a section-enlarged view of the woven fiber structure. Besides, at least one of the core layer and shell layer is made of materials with Xray opacity, such that the bioglass fiber dental implant 100 can be shown up on a Xray scan. Please note that the above embodiments are described for illustrative purpose only, and are not meant for limitations of the present invention. In other embodiments, the bioglass fiber dental implant 100 can be formed as a structure more than three layers, various shapes and various materials can be selectively used as each layer, while one of those layers is made of bioinert materials for maintaining the structure of the bioglass fiber dental implant 100, and it is enough for osseointegration that only one layer of the multilayer fiber is made of bioactive material. For example, the fiber used in the bioglass fiber dental implant 100 is ten-layer fiber, each layer can be respectively formed with a round, a hexagonal, or a strip filament, and each layer can be respectively made of bioactive materials (bioglass, collagen, hydroxylapatite (HA), tricalcium phosphate (TCP)), bioinert materials, or materials with Xray opacity, while at least one layer is made of bioinert materials, and at least one layer is made of bioactive material.

Those skilled in the art will readily observe that numerous modifications and alterations of the device and method may be made while retaining the teachings of the invention. Accordingly, the above disclosure should be construed as limited only by the appended claims.

## Claims

1. A bioglass fiber dental implant (100) with fiber material and structure, comprising:
a fixture (110) for osseointegrating a bone of a jaw or a skull; and
a peripheral junction (120), connected to the fixture (110), for connecting an abutment supporting a dental prosthesis,
wherein the fixture (110) and the peripheral junction (120) are made of fiber-enhanced resin (R), a woven fiber structure is formed by fibers (F) in the fiber-enhanced resin (R), wherein the woven fiber structure includes bioinert material; and
wherein the fiber (F) in the fiber-enhanced resin is a multilayer Single fiber and at least one layer of the multilayer Single fiber is made of bioinert material, and at least one layer of the multilayer Single fiber is made of bioactive material, wherein the at least one layer of the multilayer Single fiber made of bioactive material is made of bioglass;
**characterized in that** the woven fiber structure comprises:
a center fiber shaft (10) being provided straightly through the woven fiber structure; and
a plurality of braided fiber shafts (20) interlaced-knitted around the center fiber shaft (10), such that the center fiber shaft (10) and the plurality of braided fiber shafts (20) are respectively oriented at angular positions to show a pattern that two braided fiber shafts (20) are arranged in an X-shape that crisscrosses the center fiber shaft (10).

2. The bioglass fiber dental implant (100) of claim 1, wherein the multilayer fiber includes a core layer (2) and a shell layer (1), the shell layer (1) encloses a circumferential surface of the core layer (2), or the multilayer fiber includes a core layer (2), a middle layer (3), and a shell layer (1), the middle layer (3) encloses a circumferential surface of the core layer (2), the shell layer (1) encloses a circumferential surface of the middle layer (3).

3. The bioglass fiber dental implant (100) of claim 2, wherein an outer surface of the shell layer 1 has a punctate coating (11).

4. The bioglass fiber dental implant (100) of claim 1, wherein the bioinert material is bioinert glass fiber

5. The bioglass fiber dental implant (100) of claim 1, wherein the bioactive material is bioglass, collagen, hydroxylapatite (HA), or tricalcium phosphate (TCP).

6. The bioglass fiber dental implant (100) of claim 1, wherein each layer of the multilayer fiber is formed with a round, a hexagonal, or a strip filament.

7. The bioglass fiber dental implant (100) of claim 1, wherein a plurality of coefficients of thermal expansion of layers of the multilayer fiber is gradually lower in order from an inner layer to an outer layer.

8. The bioglass fiber dental implant (100) of claim 1, wherein the fiber-enhanced resin (R) is bioinert.

9. The bioglass fiber dental implant (100) of claim 1, wherein the fiber-enhanced resin (R) is biodegradable.

10. The bioglass fiber dental implant (100) of claim 1, wherein the fiber-enhanced resin (R) is thermosetting.

11. The bioglass fiber dental implant (100) of claim 1, wherein the fiber-enhanced resin (R) is thermoplastic.

## Patentansprüche

1. Bioglasfaser-Dentalimplantat (100) mit Fasermaterial und Struktur, umfassend:
eine Befestigung (110) zur Osseointegration eines Knochens eines Kiefers oder eines Schädels und
eine periphere Verbindung (120), die mit der Befestigung (110) verbunden ist, zum Verbinden eines Auflagers, das eine Zahnprothese trägt,
wobei die Befestigung (110) und die periphere Verbindung (120) aus einem faserverstärkten Harz (R) hergestellt sind, wobei eine gewobene Faserstruktur durch Fasern (F) in dem faserverstärkten Harz (R) ausgebildet ist, wobei die gewobene Faserstruktur bioinertes Material umfasst, und
wobei die Faser (F) in dem faserverstärkten Harz eine mehrschichtige Einzelfaser ist und zumindest eine Schicht der mehrschichtigen Einzelfaser aus bioinertem Material hergestellt ist und zumindest eine Schicht der mehrschichtigen Einzelfaser aus bioaktivem Material hergestellt ist, wobei die zumindest eine Schicht der mehrschichtigen Einzelfaser, die aus bioaktivem Material hergestellt ist, aus Bioglas hergestellt ist,
**dadurch gekennzeichnet, dass** die gewobene Faserstruktur umfasst:
einen zentralen Faserschaft (10), der gerade durch die gewobene Faserstruktur bereitgestellt ist, und
eine Mehrzahl an geflochtenen Faserschäften (20), die um den zentralen Faserschaft (20) verschränkt gestrickt sind, so dass der zentrale Faserschaft (10) und die Mehrzahl an geflochtenen Faserschäften (20) jeweils an Winkelpositionen orientiert sind, um ein Muster zu zeigen, dass zwei geflochtene Faserschäfte (20) in einer X-Form angeordnet sind, die den zentralen Faserschft (10) kreuzt.

2. Bioglasfaser-Dentalimplantat (100) gemäß Anspruch 1, bei welchem die mehrschichtige Faser eine Kernschicht (2) und eine Hüllschicht (1) beinhaltet, wobei die Hüllschicht (1) eine Umfangsfläche der Kernschicht (2) umschließt, oder bei welchem die mehrschichtige Faser eine Kernschicht (2), eine mittlere Schicht (3) und eine Hüllschicht (1) beinhaltet, wobei die mittlere Schicht (3) eine Umfassungsfläche der Kernschicht (2) umschließt und die Hüllschicht (1) eine Umfassungsfläche der mittleren Schicht (3) umschließt.

3. Bioglasfaser-Dentalimplantat (100) gemäß Anspruch 2, bei welchem eine Außenfläche der Hüllschicht (1) eine punktierte Beschichtung (11) aufweist.

4. Bioglasfaser-Dentalimplantat (100) gemäß Anspruch 1, bei welchem das bioinerte Material eine bioinerte Glasfaser ist.

5. Bioglasfaser-Dentalimplantat (100) gemäß Anspruch 1, bei welchem das bioaktive Material Bioglas, Kollagen, Hydroxylapatite (HA) oder Tricalciumphosphat (TCP) ist.

6. Bioglasfaser-Dentalimplantat (100) gemäß Anspruch 1, bei welchem jede Schicht der mehrschichtigen Faser mit einem runden, einem hexagonalen oder einem streifenförmigen Faden ausgebildet ist.

7. Bioglasfaser-Dentalimplantat (100) gemäß Anspruch 1, bei welchem eine Mehrzahl an Wärmeausdehnungskoeffizienten von Schichten der mehrschichtigen Faser in einer Ordnung von einer inneren Schicht zu einer äußeren Schicht graduell niedriger wird.

8. Bioglasfaser-Dentalimplantat (100) gemäß Anspruch 1, bei welchem das faserverstärkte Harz (R) bioinert ist.

9. Bioglasfaser-Dentalimplantat (100) gemäß Anspruch 1, bei welchem das faserverstärkte Harz (R) biologisch abbaubar ist

10. Bioglasfaser-Dentalimplantat (100) gemäß Anspruch 1, bei welchem das faserverstärkte Harz (R) warmaushärtend ist.

11. Bioglasfaser-Dentalimplantat (100) gemäß Anspruch 1, bei welchem das faserverstärkte Harz (R) thermoplastisch ist.

## Revendications

1. Implant dentaire en fibre de bioverre (100) avec un matériau et une structure en fibre, comprenant:
une fixation (110) pour l'ostéo-intégration d'un os d'une mâchoire ou d'un crâne; et
une jonction périphérique (120), raccordée à la fixation (110), pour raccorder un pilier supportant une prothèse dentaire,
dans lequel la fixation (110) et la jonction périphérique (120) sont en résine renforcée par des fibres (R), une structure en fibres tissées est formée par les fibres (F) dans la résine renforcée par des fibres (R), dans lequel la structure en fibres tissées inclut un matériau bio-inerte; et
dans lequel la fibre (F) dans la résine renforcée par des fibres est une fibre unique à couches multiples et au moins une couche de la fibre unique à couches multiples est en matériau bio-inerte, et au moins une couche de la fibre unique à couches multiples est en matériau bioactif, dans lequel l'au moins une couche de la fibre unique à couches multiples de matériau bioactif est faite en bioverre;
**caractérisé en ce que** la structure en fibres tissées comprend:
un arbre en fibres central (10) étant pourvu directement à travers la structure en fibres tissées; et
une pluralité d'arbres en fibres tressées (20) tricotés entrelacés autour de l'arbre en fibres central (10), de telle sorte que l'arbre en fibres central (10) et la pluralité d'arbres en fibres tressées (20) sont respectivement orientés à des positions angulaires pour présenter un profil selon lequel deux arbres en fibres tressées (20) sont disposés en une forme en X qui coupe l'arbre en fibres central (10).

2. Implant dentaire en fibre de bioverre (100) selon la revendication 1, dans lequel la fibre à couches multiples comprend une couche centrale (2) et une couche d'enveloppe (1), la couche d'enveloppe (1) entoure une surface circonférentielle de la couche centrale (2), ou la fibre à couches multiples inclut une couche centrale (2), une couche intermédiaire (3), et une couche d'enveloppe (1), la couche intermédiaire (3) entoure une surface circonférentielle de la couche centrale (2), la couche d'enveloppe (1) entoure une surface circonférentielle de la couche intermédiaire (3).

3. Implant dentaire en fibre de bioverre (100) selon la revendication 2, dans lequel une surface extérieure de la couche d'enveloppe (1) a un revêtement ponctué (11).

4. Implant dentaire en fibre de bioverre (100) selon la revendication 1, dans lequel le matériau bio-inerte est une fibre de verre bio-inerte.

5. Implant dentaire en fibre de bioverre (100) selon la revendication 1, dans lequel le matériau bioactif est le bioverre, le collagène, l'hydroxylapatite (HA), ou le phosphate tricalcique (TCP).

6. Implant dentaire en fibre de bioverre (100) selon la revendication 1, dans lequel chaque couche de la fibre à couches multiple est formée avec un filament arrondi, hexagonal ou en ruban.

7. Implant dentaire en fibre de bioverre (100) selon la revendication 1, dans lequel une pluralité de coefficients d'expansion thermique de couches de la fibre à couches multiples diminue progressivement dans l'ordre d'une couche intérieure à une couche extérieure.

8. Implant dentaire en fibre de bioverre (100) selon la revendication 1, dans lequel la résine renforcée par des fibres (R) est bio-inerte.

9. Implant dentaire en fibre de bioverre (100) selon la revendication 1, dans lequel dans lequel la résine renforcée par des fibres (R) est biodégradable.

10. Implant dentaire en fibre de bioverre (100) selon la revendication 1, dans lequel dans lequel la résine renforcée par des fibres (R) est thermodurcissable.

11. Implant dentaire en fibre de bioverre (100) selon la revendication 1, dans lequel dans lequel la résine renforcée par des fibres (R) est thermoplastique.
